# EUROPEAN PATENT APPLICATION

(11) **EP 4 797 346 A1**
(43) Date of publication of application: **26.08.2026**
(21) Application number: 23958715.7
(22) Date of filing: 05.12.2023
(51) Int. Cl.: H01M 4/36, H01M 4/58, H01M 4/583, H01M 4/136, H01M 10/0525, C01B 25/45, C01B 32/05, C01B 32/205

(54) **LITHIUM MANGANESE IRON PHOSPHATE MATERIAL AND PREPARATION METHOD THEREFOR, POSITIVE ELECTRODE SHEET, AND LITHIUM ION BATTERY**

(30) Priority: 15.11.2023 CN 202311520716
(71) Applicant: Eve Power Co., Ltd., Jingmen, Hubei 448000 (CN)
(72) Inventor: WEN, Shengyao, Jingmen, Hubei 448000 (CN); WU, Tingting, Jingmen, Hubei 448000 (CN); GAO, Jianhang, Jingmen, Hubei 448000 (CN); CHEN, Meng, Jingmen, Hubei 448000 (CN); LIU, Fanfen, Jingmen, Hubei 448000 (CN); CHE, Liyuan, Jingmen, Hubei 448000 (CN)
(74) Representative: Berggren Oy
(86) International application number: PCT/CN2023/136385
(87) International publication number: WO 2025/102446

(57) **Abstract**

The present application provides a lithium manganese iron phosphate material, a method for preparing the same, a positive electrode plate, and a lithium-ion battery. The lithium manganese iron phosphate material includes a core and a coating layer coated on the surface of the core. A material of the core includes a compound having a chemical formula of LiₐMn_{b}Fe_{c}M_{d}PO₄, where M includes at least one element selected from the group consisting of magnesium, calcium, strontium, cobalt, titanium, zirconium, molybdenum, vanadium, niobium, nickel, scandium, chromium, copper, zinc, beryllium, lanthanum, and aluminum. The coating layer is configured to be formed by sintering a carbon source, and the carbon coating layer includes graphitized carbon.

## Description

This application claims priority to and the benefit of Chinese patent application filed with the China National Intellectual Property Administration on Nov. 15, 2023, with the Application No. 202311520716.X, the disclosure of which is incorporated herein by reference in its entirety.

### TECHNICAL FIELD

The present application relates to the technical field of electrode materials, and in particular to a lithium manganese iron phosphate material, a method for preparing the same, a positive electrode plate, and a lithium-ion battery.

### BACKGROUND

The positive electrode materials of lithium-ion secondary batteries are mainly lithium iron phosphate (LiFePO₄). Lithium manganese iron phosphate (LiMnFePO₄) is a positive electrode material obtained by introducing manganese on the basis of LiFePO₄. The introduction of manganese enables lithium manganese iron phosphate to have a higher voltage plateau. The redox potential of lithium manganese iron phosphate is approximately 4.1 V, while redox potential of lithium iron phosphate is approximately 3.4 V. In the related art, the use of lithium manganese iron phosphate as a positive electrode material for batteries is still at an early stage of industrialization, mainly because the cycling performance and specific energy of lithium manganese iron phosphate are low, which seriously affects its commercial application.

### TECHNICAL PROBLEM

This application provides a lithium manganese iron phosphate material, a method for preparing the same, and a lithium-ion battery, which can address the technical problems of low specific energy and poor cycling performance of lithium manganese iron phosphate.

### TECHNICAL SOLUTIONS

In a first aspect, some embodiments of the present application provide a lithium manganese iron phosphate material, which includes a core and a coating layer coated on the surface of the core. A material of the core includes a compound having a chemical formula of LiₐMn_{b}Fe_{c}M_{d}PO₄, where M includes at least one element selected from the group consisting of magnesium, calcium, strontium, cobalt, titanium, zirconium, molybdenum, vanadium, niobium, nickel, scandium, chromium, copper, zinc, beryllium, lanthanum, and aluminum. The coating layer is configured to be formed by sintering a carbon source, and the carbon coating layer includes graphitized carbon.

In a second aspect, some embodiments of the present application provide a method for preparing a lithium manganese iron phosphate material, including the following steps:
mixing a lithium source, a manganese source, an iron source, a phosphorus source, a doping metal source, and a carbon source to obtain a precursor 1; and
performing a sintering treatment on the precursor 1 under an inert atmosphere to obtain the lithium manganese iron phosphate material;
where the doping metal source includes one or more selected from the group consisting of a magnesium source, a calcium source, a strontium source, a cobalt source, a titanium source, a zirconium source, a molybdenum source, a vanadium source, a niobium source, a nickel source, a scandium source, a chromium source, a copper source, a zinc source, a beryllium source, a lanthanum source, and an aluminum source.

In a third aspect, some embodiments of the present application provide a method for preparing a lithium manganese iron phosphate material, including the following steps:
mixing a manganese source, an iron source, a phosphorus source, a doping metal M source, hydrogen peroxide, and a complexing agent to obtain a mixed solution 1;
heating the mixed solution 1, followed by filtration and drying to obtain a precursor 2;
mixing the precursor 2, a carbon source, a lithium source, and a surfactant to obtain a precursor 3; and
performing a sintering treatment on the precursor 3 to obtain the lithium manganese iron phosphate material;
where the doping metal source includes one or more selected from the group consisting of a magnesium source, a calcium source, a strontium source, a cobalt source, a titanium source, a zirconium source, a molybdenum source, a vanadium source, a niobium source, a nickel source, a scandium source, a chromium source, a copper source, a zinc source, a beryllium source, a lanthanum source, and an aluminum source.

In a fourth aspect, some embodiments of the present application provide a positive electrode plate, which includes a positive electrode current collector and a positive electrode active material layer. The positive electrode active material layer is located on a surface of the positive electrode current collector, and a material of the positive electrode active material layer includes the above-mentioned lithium manganese iron phosphate material or a lithium manganese iron phosphate material obtained by the above-mentioned preparation method.

In a fifth aspect, some embodiments of the present application provide a lithium-ion battery, which includes the above-mentioned lithium manganese iron phosphate material.

### BENEFICIAL EFFECTS OF THIS APPLICATION

The beneficial effects of the present application are as follows:
(1) In the core material of lithium manganese iron phosphate, a metal element M is doped so as to improve the cycling performance of the lithium manganese iron phosphate material, and a carbon coating layer containing graphitized carbon is coated on the outer surface of the core material of lithium manganese iron phosphate, whereby the specific energy of the lithium manganese iron phosphate material is improved by means of the graphitized carbon.
(2) By using graphitized carbon in the carbon coating layer, the specific energy of the battery can be improved. The higher the content of graphitized carbon in the carbon coating layer, the more favorable it is for lithium-ion interfacial diffusion, and thus the better the rate performance of the battery, the higher the specific capacity, and consequently the higher the specific energy. However, the faster the lithium-ion interfacial diffusion, the poorer the capacity retention rate of the battery will become, which may in turn lead to deterioration of the cycling retention rate of the battery. Therefore, by doping the metal element M in the core material of lithium manganese iron phosphate, the cycling performance of the battery is improved, so that the technical problems of low specific energy and poor cycling performance of lithium manganese iron phosphate are synergistically improved by means of metal element doping and the use of the carbon coating layer containing graphitized carbon.

### EMBODIMENTS OF THIS APPLICATION

Unless otherwise defined, all professional and scientific terms used herein have the same meanings as those familiar to those skilled in the art, and the materials or reagents used in the examples and comparative examples of the present application are commercially available. In addition, any methods and materials similar or equivalent to those described can be applied in the present application. The preferred implementation methods and materials described herein are for illustrative purposes only and are not intended to limit the content of the present application.

It should be noted that the described order of the following examples is not intended to limit the preferred order of the examples. The various embodiments of the present application may exist in the form of a range; it should be understood that the description in the form of a range is merely for convenience and brevity and should not be construed as a rigid limitation on the scope of the present application; therefore, it should be considered that the description of the range has specifically disclosed all possible sub-ranges and individual values within that range. For example, a range from 1 to 6 should be considered to have specifically disclosed sub-ranges such as from 1 to 3, from 1 to 4, from 1 to 5, from 2 to 4, from 2 to 6, from 3 to 6, etc., as well as individual numbers within the recited range, such as 1, 2, 3, 4, 5, and 6, regardless of the range to which it applies. In addition, whenever a numerical range is indicated herein, it is intended to include any referenced number (fraction or integer) within the indicated range.

In the description of the present application, the term "comprising" means "including but not limited to".

The terms "a plurality of", "multiple", "multiple times", or similar expressions refer to two or more (times), for example, may be two, three, four, five, six, etc.

The term "and/or" encompasses any one of two or more related listed items, as well as any and all combinations of the related listed items. The any and all combinations include any two related listed items, any more related listed items, or a combination of all related listed items. For example, "A and/or B" includes three parallel scenarios: A alone, B alone, and A+B. As another example, in the technical solution of "A, and/or B, and/or C, and/or D", it includes any single one of A, B, C, D (i.e., a technical solution connected by "logical OR"), also includes any and all combinations of A, B, C, D, i.e., includes any two or any three of A, B, C, D, and also includes the combination of all four of A, B, C, D (i.e., a technical solution connected by "logical AND").

In a first aspect, the present application provides a lithium manganese iron phosphate material. The lithium manganese iron phosphate material includes a doped lithium manganese iron phosphate core and a carbon coating layer provided on the surface of the doped lithium manganese iron phosphate core. The doped lithium manganese iron phosphate has a chemical formula of LiₐMn_{b}Fe_{c}M_{d}PO₄, where the doping metal M includes one, two, or more elements selected from the group consisting of magnesium, calcium, strontium, cobalt, titanium, zirconium, molybdenum, vanadium, niobium, nickel, scandium, chromium, copper, zinc, beryllium, lanthanum, and aluminum.

The carbon source used to form the carbon coating layer includes an organic carbon source. Suitable organic carbon sources include at least one selected from the group consisting of glucose, xylitol, polyethylene glycol (PEG), sucrose, lactose, and citrated polyacrylamide.

The carbon coating layer described above includes a certain amount of graphitized carbon. The graphitization of a carbon source refers to a process in which non-graphitic carbon is heated, in a high-temperature environment and in a protective medium or under conditions isolated from air, to a temperature above its graphitization temperature, so that, through physical changes, the stacking structure of hexagonal carbon atom planar network layers is improved and developed, and the non-graphitic carbon is converted into graphitic carbon having a three-dimensional regular and ordered graphite structure. The graphitization of the carbon source can improve the bulk density, electrical conductivity, thermal conductivity, corrosion resistance, and machinability of the material. In the present application, the organic carbon source, after being subjected to high-temperature calcination and carbonization, will form a certain degree of graphitized ordering. It can be understood that, since the graphitization temperature of the organic carbon source is generally relatively high, the organic carbon source in the present application can also form a certain degree of graphitized ordering when subjected to high-temperature sintering in a high-temperature environment lower than its graphitization temperature and in a protective medium. The degree of graphitization of the organic carbon source is related to the nature of the organic carbon source itself and to the calcination temperature and calcination time provided. The closer the graphitization temperature of the organic carbon source is to the sintering temperature provided, and the longer the calcination time, the higher the degree of graphitization of the organic carbon source. The graphitized carbon contained in the carbon coating layer of the present application is not fully graphitized carbon, but carbon having a certain three-dimensional regular graphitized structure.

Further, when the carbon source is calcined at different calcination temperatures, the degree of graphitization of the graphitized carbon formed from the carbon source may be vary. Different calcination temperatures and holding times are selected according to different carbon sources, so as to control the mass percentage content of the graphitized carbon.

Preferably, in some embodiments of the present application, the content of the graphitized carbon accounts for 0.48% to 1.02% by mass of the lithium manganese iron phosphate active material. The content of the graphitized carbon is calculated according to the following formula:

Content of graphitized carbon = (degree of graphitization × mass of carbon source) / mass of lithium manganese iron phosphate active material.

It can be understood that, the content of graphitized carbon in the lithium manganese iron phosphate material may be any value between 0.48% and 1.02%, for example, 0.5%, 0.6%, 0.7%, 0.8%, 0.9%, or 1.0%. Alternatively, the content of graphitized carbon in the lithium manganese iron phosphate material may be any range within 0.48%-1.02%, for example, 0.48%-0.8%, 0.48%-0.9%, 0.6%-0.9%, or 0.6%-1.0%.

By adding a certain content of graphitized carbon into the carbon coating layer of the lithium manganese iron phosphate material, the charge-discharge specific energy of the positive electrode material can be increased. Since the carbon coating layer contains a certain content of graphitized carbon, and the graphitized carbon has a regularly ordered three-dimensional structure, it is favorable for lithium ions to diffuse therein. The higher the content of graphitized carbon in the carbon coating layer, the faster the diffusion rate of lithium ions, and consequently the better the rate performance of the lithium manganese iron phosphate active material, the higher the specific capacity, and thus the higher the specific energy. However, an excessively high diffusion rate of lithium ions in the lithium manganese iron phosphate active material may lead to a decrease in capacity retention rate of the lithium manganese iron phosphate active material, which results in deteriorated cycling performance of the lithium manganese iron phosphate active material.

Preferably, in some embodiments of the present application, in the lithium manganese iron phosphate material, the mass percentage of the carbon coating layer ranges from 0.5% to 3%. The mass percentage of the carbon coating layer may be any value between 0.5% and 3%, for example, 0.8%, 1%, 1.2%, 1.5%, 1.7%, 2%, 2.2%, 2.5%, or 2.8%. Alternatively, the content of the carbon coating layer may be any range within 0.5%-3%, for example, 0.5%-1.5%, 0.5%-2%, 1%-3%, or 2%-3%.

The lithium manganese iron phosphate material is configured as a multi-metal doped lithium manganese iron phosphate material. Lithium manganese iron phosphate has an olivine structure similar to that of lithium iron phosphate, in which PO₄ has a stable tetrahedral structure. During full charging of the battery, the tetrahedral structure of PO₄ serves as structural support, so that the lithium manganese iron phosphate material exhibits excellent thermodynamic and kinetic stability. By introducing manganese into lithium iron phosphate, the voltage plateau of the positive electrode material can be increased. For example, the voltage plateau of the lithium manganese iron phosphate material is 4.1 V, whereas the voltage plateau of lithium iron phosphate is 3.4 V, thereby effectively improving the energy density of the battery. However, with an increase in the manganese content, the conductivity and electrochemical activity of the lithium manganese iron phosphate material decrease. In the lithium manganese iron phosphate material provided in the present application, at least one doping metal element M is included. The introduced doping metal element M substitutes for the Fe metal sites in the LiMnFePO₄ crystal, thereby improving the lithium-ion diffusion pathways and increasing the electrical conductivity of the positive electrode material, or the doping metal element M and oxygen form a more stable lattice framework, thereby enhancing structural stability, improving the rate performance and cycling stability of the material, and at the same time increasing the energy density.

Preferably, in some embodiments of the present application, M includes at least one element selected from the group consisting of magnesium, calcium, strontium, cobalt, titanium, zirconium, molybdenum, vanadium, niobium, nickel, scandium, chromium, copper, zinc, beryllium, lanthanum, and aluminum. It can be understood that M may include one metal element, two metal elements, or three metal elements. In preferred embodiments, among the metal elements contained in M, the phosphates of a portion of the metal elements have an olivine structure. For example, when M is nickel or cobalt, or when M consists of nickel and cobalt, the phosphates of M, together with manganese phosphate or iron phosphate, are configured in an olivine structure, thereby forming a multi-olivine-type positive electrode material. The charge-discharge curves and cycling performance curves of the multi-olivine-type positive electrode material can be regarded as a linear superposition of the charge-discharge curves and cycling performance curves of the olivine structures formed by the phosphates of each metal element, thereby effectively improving the cycling performance of the positive electrode material.

In the doped lithium manganese iron phosphate material, oxygen atoms form a hexagonal close-packed lattice, the tetrahedral voids in the lattice are occupied by phosphate anions, and the octahedral voids in the lattice are occupied by lithium ions, iron ions, manganese ions, and M ions. The voids occupied by lithium ions form continuous channels throughout the lattice. Therefore, the ratio of the content of lithium to the content of the doping metal(s) M, and the ratio of the content of the doping metal(s) M to the content of phosphorus, are both related to the number of voids within the lattice structure constituting the positive electrode material. The higher the ratio of the content of lithium to the content of the doping metal(s), the higher the specific capacity of the positive electrode material, but the alkalinity of the material is enhanced and side reactions increase. The higher the ratio of the content of the doping metal(s) M to the content of phosphorus, the lower the specific capacity and the specific energy of the positive electrode material, but this is beneficial for improving the cycling performance of the positive electrode material.

In preferred embodiments, taking into comprehensive consideration the roles of the respective elements in the doped lithium manganese iron phosphate material, the inventors have found through research that, when the molar ratio ranges of the respective elements in LiₐMn_{b}Fe_{c}M_{d}PO₄ satisfy the following conditions, it is conducive to balancing the specific energy and cycling performance of the lithium manganese iron phosphate material, wherein 0.98 ≤ a ≤ 1.10, 0.10 ≤ b ≤ 0.68, 0.20 ≤ c ≤ 0.70, 0.01 ≤ d ≤ 0.12, and 0.98 ≤ a/(b+c+d) ≤ 1.03.

In alternative embodiments, the molar ratio ranges of the respective elements in LiₐMn_{b}Fe_{c}M_{d}PO₄ may also satisfy the following conditions: 0.98 ≤ a ≤ 1.05, 0.10 ≤ b ≤ 0.68, 0.20 ≤ c ≤ 0.70, 0.005 ≤ d ≤ 0.12, and 0.98 ≤ a/(b+c+d) ≤ 1.03.

Furthermore, the molar ratio range of lithium may be any range within 0.98-1.10, the molar ratio range of manganese may be any range within 0.10-0.68, the molar ratio range of iron may be any range within 0.20-0.70, and the molar ratio range of the doping metal(s) M may be any range within 0.005-0.12, which will not be enumerated one by one in the embodiments of the present application.

The value of a/(b+c+d) may be any value between 0.98 and 1.03, for example, 0.99, 1.0, 1.01, or 1.02; alternatively, the value of a/(b+c+d) may be any range within 0.98-1.03, for example, 0.98-1.02 or 0.99-1.01.

In further preferred embodiments, in LiₐMn_{b}Fe_{c}M_{d}PO₄, the molar content of iron is less than the molar content of manganese. Appropriately increasing the molar content of manganese relative to the molar content of iron is beneficial for increasing the energy density of the lithium manganese iron phosphate material.

In a second aspect, the present application provides a method for preparing the above-described lithium manganese iron phosphate material. This preparation method is configured as a solid-phase synthesis method, and the specific preparation method includes the following steps:
Step (1): Provide sufficient amounts of a lithium source, a manganese source, an iron source, a doping metal source, a phosphorus source, and a carbon source, and mix the lithium source, the manganese source, the iron source, the M source, the phosphorus source, and the carbon source to obtain a precursor 1. Lithium from the lithium source, manganese from the manganese source, iron from the iron source, metal M from the doping metal source, and phosphorus from the phosphorus source are proportioned according to the stoichiometric ratio in LiₐMn_{b}Fe_{c}M_{d}PO₄, with 0.98 ≤ a ≤ 1.10, 0.10 ≤ b ≤ 0.68, 0.20 ≤ c ≤ 0.70, 0.01 ≤ d ≤ 0.12, and 0.98 ≤ a/(b+c+d) ≤ 1.03. The carbon source is present in a mass percentage ranging from 0.5% to 3% in the formed lithium manganese iron phosphate active material.
Step (2): Perform a calcining process on the above precursor 1 under an inert atmosphere and cooling to room temperature under the inert atmosphere to obtain a powder. The inert atmosphere includes nitrogen, argon, or a mixed gas of nitrogen and argon. Suitable process control parameters for the sintering process include: heating at a heating rate of 2-10°C/min to 600-950°C, and holding at this temperature for 5-24 hours.

In a third aspect, the present application further provides a method for preparing the above-described lithium manganese iron phosphate material. The second preparation method includes a mixed process of liquid-phase and solid-phase synthesis, and the specific preparation method includes the following steps:
Step (1): Mix a manganese source, an iron source, a phosphorus source, a doping metal M source, hydrogen peroxide, and a complexing agent to obtain a mixed solution 1.
Step (2): Perform a heat treatment on the mixed solution 1, followed by filtration and drying to obtain a precursor 2. The heating temperature for the heat treatment ranges from 60°C to 95°C.
Step (3): Mix the precursor 2, a carbon source, a lithium source, and a surfactant to obtain a precursor 3.
Step (4): Perform a sintering treatment on the precursor 3 to obtain the lithium manganese iron phosphate material. Suitable process control parameters for the sintering process include: heating at a heating rate of 2-10°C/min to 600-950°C, and holding at this temperature for 5-24 hours.

In steps (1) to (3) of the above second preparation method, lithium from the lithium source, manganese from the manganese source, iron from the iron source, mental M from the doping metal source, and phosphorus from the phosphorus source are proportioned according to the stoichiometric ratio in LiₐMn_{b}Fe_{c}M_{d}PO₄, where 0.98 ≤ a ≤ 1.05, 0.10 ≤ b ≤ 0.68, 0.20 ≤ c ≤ 0.70, 0.005 ≤ d ≤ 0.12, and 0.98 ≤ a/(b+c+d) ≤ 1.03. The carbon source is present in a mass percentage ranging from 0.5% to 3% in the formed lithium manganese iron phosphate active material.

The complexing agent used in the above second preparation method includes one or more selected from the group consisting of 1-hydroxyethylidene-1,1-diphosphonic acid (HEDP), aminotris(methylene phosphonic acid) (ATMP), and diethylenetriaminepentaacetic acid (DTPA).

The surfactant used in the above second preparation method includes polyethylene glycol (PEG) or aminotris(methylene phosphonic acid) (ATMP).

In the above two synthesis methods, the doping metal source includes one or more selected from the group consisting of a magnesium source, a calcium source, a strontium source, a cobalt source, a titanium source, a zirconium source, a molybdenum source, a vanadium source, a niobium source, a nickel source, a scandium source, a chromium source, a copper source, a zinc source, a beryllium source, a lanthanum source, and an aluminum source.

When the carbon source contains glucose, the carbonization temperature of the glucose is 300°C, and the graphitization temperature of the glucose is not lower than 800°C. Therefore, under a prolonged calcination temperature of 600-950°C and protection by an inert atmosphere, the glucose will form a three-dimensional structure with a certain regular graphitic ordering. The higher the calcination temperature and the longer the holding time, the higher the degree of graphitization of the glucose.

Preferably, in some embodiments of the present application, the lithium source in the above two synthesis methods includes at least one of lithium carbonate and lithium dihydrogen phosphate.

Preferably, in some embodiments of the present application, the iron source in the above two synthesis methods includes at least one selected from the group consisting of iron phosphate, ferric hydrogen phosphate, ferric dihydrogen phosphate, ferric acetate, and iron powder.

Preferably, in some embodiments of the present application, the manganese source in the above two synthesis methods includes at least one selected from the group consisting of manganese sulfate, manganese carbonate, manganese nitrate, manganese acetate, manganese oxalate, manganese phosphate, and manganese hydrogen phosphate.

Preferably, in some embodiments of the present application, the phosphorus source in the above two synthesis methods includes at least one of phosphoric acid and ammonium dihydrogen phosphate.

Preferably, in some embodiments of the present application, the M source in the above two synthesis methods includes at least one selected from the group consisting of phosphates, hydrogen phosphates, dihydrogen phosphates, carbonates, formates, acetates, hydroxyacetates, lactates, tartrates, oxalates, oxides, hydroxides, fluorides, chlorides, nitrates, sulfates, and bromides of at least one element selected from the group consisting of magnesium, calcium, strontium, cobalt, titanium, zirconium, molybdenum, vanadium, niobium, nickel, scandium, chromium, copper, zinc, beryllium, lanthanum, and aluminum.

Further, in some preferred embodiments, the M source includes phosphates of at least one element selected from the group consisting of magnesium, calcium, strontium, cobalt, titanium, zirconium, molybdenum, vanadium, niobium, nickel, scandium, chromium, copper, zinc, beryllium, lanthanum, and aluminum, and the phosphates of at least one element selected from the group consisting of magnesium, calcium, strontium, cobalt, titanium, zirconium, molybdenum, vanadium, niobium, nickel, scandium, chromium, copper, zinc, beryllium, lanthanum, and aluminum from the M source are configured in an olivine structure. For example, when M is nickel or cobalt, or when M consists of nickel and cobalt, the phosphates of M, together with manganese phosphate or iron phosphate, are configured in an olivine structure, thereby forming a multi-olivine-type positive electrode material. The charge-discharge curves and cycling performance curves of the multi-olivine-type positive electrode material can be regarded as a linear superposition of the charge-discharge curves and cycling performance curves of the olivine structures formed by the phosphates of each metal element, thereby effectively improving the cycling performance of the positive electrode material.

It should be noted that, in the second preparation method, by synthesizing a manganese iron phosphate precursor through a liquid-phase method, atomic-level mixing of Mn and Fe can be achieved, thereby forming a uniform manganese iron phosphate precursor and reducing segregation and dissolution of Mn. At the same time, by synthesizing LiₐMn_{b}Fe_{c}M_{d}PO₄ through a solid-phase method, damage to the manganese iron phosphate precursor can be reduced, and the process is easy to implement on an industrial scale.

In a fourth aspect, the present application provides a positive electrode plate, which includes a positive electrode current collector and a positive electrode active material layer. The positive electrode active material layer is located on the surface of the positive electrode current collector, and the material of the positive electrode active material layer includes the above-described lithium manganese iron phosphate material or a lithium manganese iron phosphate material obtained by the above-described preparation method.

In a fifth aspect, the present application provides a lithium-ion battery, which includes the above-described lithium manganese iron phosphate material or a lithium manganese iron phosphate material obtained by the above-described preparation method. The lithium-ion battery may be an aluminum-can lithium-ion battery or a pouch lithium-ion battery.

The following provides a detailed description of specific embodiments and comparative examples, including their technical solutions and technical effects. It should be noted that the embodiments provided below are merely part of the embodiments of the present application and are not intended to impose any limitation on the present application.

### Performance Test 1:

By comparatively analyzing the specific energy and cycling performance parameters of the three lithium manganese iron phosphate materials provided in Examples 1-3 with those of the two lithium manganese iron phosphate materials provided in Comparative Examples 1-2, it is verified that the specific energy and cycling performance of the lithium manganese iron phosphate material provided in the present application are significantly improved compared with those of the lithium manganese iron phosphate materials in the related art.

### Example 1

This example provides a lithium manganese iron phosphate material, and the chemical formula of the core material of the lithium manganese iron phosphate material is Li_{1.03}Mn_{0.65}Fe_{0.35}Mg_{0.1}PO₄. The carbon sources forming the coating layer of the lithium manganese iron phosphate material include glucose and PEG. The lithium manganese iron phosphate material is prepared by the following method:

Step (1): Provide sufficient amounts of lithium carbonate, manganese carbonate, iron phosphate, magnesium oxide, phosphoric acid, glucose, and PEG, and mix and grind the lithium carbonate, manganese carbonate, iron phosphate, magnesium oxide, phosphoric acid, glucose, and PEG to obtain a precursor 1. Lithium from the lithium carbonate, manganese from the manganese carbonate, iron from the iron phosphate, magnesium from the magnesium oxide, and phosphorus from the phosphoric acid are proportioned according to the stoichiometric ratio in the chemical formula Li_{1.03}Mn_{0.65}Fe_{0.35}Mg_{0.1}PO₄, i.e., in a molar ratio of Li:Mn:Fe:Mg:P = 1.03:0.65:0.35:0.1:1.

Step (2): Perform a sintering process on the above precursor 1 under an inert atmosphere and cooling to room temperature under the inert atmosphere to obtain a powder. The inert atmosphere includes nitrogen, argon, or a mixed gas of nitrogen and argon. Suitable process control parameters for the sintering process include: heating at a heating rate of 6°C/min to 800°C, and holding at this temperature for 18 hours. Glucose and PEG form a carbon coating layer on the outer surface of Li_{1.03}Mn_{0.65}Fe_{0.35}Mg_{0.1}PO₄, and glucose and PEG are converted into graphitized carbon through high-temperature calcination, with the mass percentage of graphitized carbon in the lithium manganese iron phosphate material being 1.0%.

### Example 2

This example provides a lithium manganese iron phosphate material, and the chemical formula of the core material of the lithium manganese iron phosphate material is Li_{1.02}Mn_{0.58}Fe_{0.35}Nb_{0.1}PO₄. The carbon sources forming the carbon coating layer of the lithium manganese iron phosphate material include glucose and PEG. The lithium manganese iron phosphate material is prepared by the following method:

Step (1): Provide sufficient amounts of lithium carbonate, manganese carbonate, iron phosphate, Nb₂O₅, phosphoric acid, glucose, and PEG, and mix and grind the lithium carbonate, manganese carbonate, iron phosphate, Nb₂O₅, phosphoric acid, glucose, and PEG to obtain a precursor 1. Lithium from the lithium carbonate, manganese from the manganese carbonate, iron from the iron phosphate, Nb from Nb₂O₅, and phosphorus from the phosphoric acid are proportioned according to the stoichiometric ratio in the chemical formula Li_{1.02}Mn_{0.58}Fe_{0.35}Nb_{0.1}PO₄, i.e., in a molar ratio of Li:Mn:Fe:Nb:P = 1.02:0.58:0.35:0.1:1.

Step (2): Perform a calcining process on the above precursor 1 under an inert atmosphere and cooling to room temperature under the inert atmosphere to obtain a powder. The inert atmosphere includes nitrogen, argon, or a mixed gas of nitrogen and argon. Suitable process control parameters for the calcining process include: heating at a heating rate of 6°C/min to 800°C, and holding at this temperature for 18 hours. Glucose and PEG form a carbon coating layer on the outer surface of Li_{1.02}Mn_{0.58}Fe_{0.35}Nb_{0.1}PO₄, and glucose and PEG are converted into graphitized carbon through high-temperature calcination, with the content of graphitized carbon in the lithium manganese iron phosphate material being 0.8%.

### Example 3

This example provides a lithium manganese iron phosphate material, and the chemical formula of the core material of the lithium manganese iron phosphate material is Li_{1.01}Mn_{0.58}Fe_{0.35}Nb_{0.08}Ti_{0.02}PO₄. The carbon sources forming the carbon coating layer of the lithium manganese iron phosphate material include glucose and PEG. The lithium manganese iron phosphate material is prepared by the following method:

Step (1): Provide sufficient amounts of lithium carbonate, manganese carbonate, iron phosphate, Nb2O5, TiO2, phosphoric acid, glucose, and PEG, and mix and grind the lithium carbonate, manganese carbonate, iron phosphate, Nb2O5, TiO2, phosphoric acid, glucose, and PEG to obtain a precursor 1. Lithium from the lithium carbonate, manganese from the manganese carbonate, iron from the iron phosphate, Nb from Nb₂O₅, Ti from TiO₂, and phosphorus from the phosphoric acid are proportioned according to the stoichiometric ratio in the chemical formula Li_{1.01}Mn_{0.58}Fe_{0.35}Nb_{0.08}Ti_{0.02}PO₄, i.e., in a molar ratio of Li:Mn:Fe:Nb:Ti:P = 1.01:0.58:0.35:0.08:0.02:1.

Step (2): Perform a calcining process on the above precursor 1 under an inert atmosphere and cooling to room temperature under the inert atmosphere to obtain a powder. The inert atmosphere includes nitrogen, argon, or a mixed gas of nitrogen and argon. Suitable process control parameters for the calcining process include: heating at a heating rate of 6°C/min to 800°C, and holding at this temperature for 18 hours. Glucose and PEG form a carbon coating layer on the outer surface of Li_{1.01}Mn_{0.58}Fe_{0.35}Nb_{0.08}Ti_{0.02}PO₄, and glucose and PEG are converted into graphitized carbon through high-temperature calcination, with the content of graphitized carbon in the lithium manganese iron phosphate material being 0.5%.

### Comparative Example 1

This comparative example 1 provides a lithium manganese iron phosphate material, and the chemical formula of the core material of the lithium manganese iron phosphate material is Li_{1.04}Mn_{0.55}Fe_{0.35}Mg_{0.1}PO₄. The carbon source forming the carbon coating layer of the lithium manganese iron phosphate material is graphite. The lithium manganese iron phosphate material is prepared by the following method:
Step (1): Provide sufficient amounts of lithium carbonate, manganese carbonate, iron phosphate, magnesium oxide, phosphoric acid, and graphite, and mix the lithium carbonate, manganese carbonate, iron phosphate, magnesium oxide, phosphoric acid, and graphite to obtain a precursor 1. Lithium from the lithium carbonate, manganese from the manganese carbonate, iron from the iron phosphate, magnesium from the magnesium oxide, and phosphorus from the phosphoric acid are proportioned according to the stoichiometric ratio in the chemical formula Li_{1.04}Mn_{0.55}Fe_{0.35}Mg_{0.1}PO₄, i.e., in a molar ratio of Li:Mn:Fe:Mg:P = 1.04:0.55:0.35:0.1:1.
Step (2): Perform a calcining process on the above precursor 1 under an inert atmosphere and cooling to room temperature under the inert atmosphere to obtain a powder. The inert atmosphere includes nitrogen, argon, or a mixed gas of nitrogen and argon. Suitable process control parameters for the calcining process include: heating at a heating rate of 6°C/min to 800°C, and holding at this temperature for 18 hours. Graphite forms a carbon coating layer on the outer surface of Li_{1.04}Mn_{0.55}Fe_{0.35}Mg_{0.1}PO₄, with the mass percentage of graphite in the lithium manganese iron phosphate material being 1.2%.

### Comparative Example 2

This comparative example 1 provides a lithium manganese iron phosphate material, and the chemical formula of the core material of the lithium manganese iron phosphate material is Li_{1.04}Mn_{0.55}Fe_{0.35}Co_{0.1}PO₄. The carbon source forming the carbon coating layer of the lithium manganese iron phosphate material is carbon black. The lithium manganese iron phosphate material is prepared by the following method:
Step (1): Prepare sufficient amounts of lithium carbonate, manganese carbonate, iron phosphate, cobalt oxide, phosphoric acid, and carbon black, and mix the lithium carbonate, manganese carbonate, iron phosphate, cobalt oxide, phosphoric acid, and carbon black to obtain a precursor 1. Lithium from the lithium carbonate, manganese from the manganese carbonate, iron from the iron phosphate, cobalt from cobalt oxide, and phosphorus from the phosphoric acid are proportioned according to the stoichiometric ratio in the chemical formula Li_{1.04}Mn_{0.55}Fe_{0.35}Co_{0.1}PO₄, i.e., in a molar ratio of Li:Mn:Fe:Co:P = 1.04:0.55:0.35:0.1:1.
Step (2): Perform a calcining process on the above precursor 1 under an inert atmosphere and cooling to room temperature under the inert atmosphere to obtain a powder. The inert atmosphere includes nitrogen, argon, or a mixed gas of nitrogen and argon. Suitable process control parameters for the calcining process include: heating at a heating rate of 6°C/min to 800°C, and holding at this temperature for 18 hours. Carbon black forms a carbon coating layer on the outer surface of Li_{1.04}Mn_{0.55}Fe_{0.35}Mg_{0.1}PO₄, and the carbon black is converted into graphitized carbon through high-temperature calcination, with the mass percentage of graphitized carbon in the lithium manganese iron phosphate material being 1.05%.

The preparation method of the lithium-ion batteries provided in the Examples and Comparative Examples is as follows:
(1) Preparation of Negative Electrode Plate
   Graphite as the negative electrode active material, acetylene black as the conductive agent, styrene-butadiene rubber as the binder, and sodium carboxymethyl cellulose as the thickener are mixed at a mass ratio of graphite:acetylene black:styrene-butadiene rubber:sodium carboxymethyl cellulose = 95:2:2:1. An appropriate amount of deionized water is added, followed by thorough stirring and mixing to form a uniform negative electrode slurry. The slurry is coated onto a negative electrode current collector (copper foil), and then dried and performed a cold pressing treatment to obtain a negative electrode plate.
(2) Preparation of Positive Electrode Plate
   The corresponding positive electrode active material, acetylene black as the conductive agent, and polyvinylidene fluoride as the binder are mixed at a mass ratio of 96:2:2. N-methyl-2-pyrrolidone is used as the solvent, and the mixture is thoroughly ground and stirred to form a uniform positive electrode slurry. The slurry is coated onto a positive electrode current collector (aluminum foil), and then dried and performed a cold pressing treatment to obtain a positive electrode plate.
(3) Preparation of Battery
   The positive electrode plate, a separator (a PE/PP porous polymer film), and the negative electrode plate are stacked in sequence, with the separator positioned between the positive and negative electrode plates to provide isolation, and then wound to obtain a jelly roll. The jelly roll is placed in an outer packaging foil, and a lithium-ion electrolyte composed of organic solvents such as ethylene carbonate (EC) / ethyl methyl carbonate (EMC) and LiPF6 is injected into the dried cell. The cell is then subjected to vacuum sealing, standing, formation, shaping, and other processes to obtain a lithium-ion battery.

### Performance Test Methods:

Using a thermostatic chamber battery testing cabinet, the lithium-ion batteries are subjected to charge-discharge cycling at a current of 0.1C under a specified temperature for three weeks to obtain the actual capacity Q of the lithium-ion battery.

The batteries prepared from the lithium manganese iron phosphate materials of Example 1-3 and Comparative Example 1-2 are respectively subjected to 1C discharge specific energy (mAh/g) tests.

The batteries prepared from the lithium manganese iron phosphate materials of Example 1-3 and Comparative Example 1-2 are respectively subjected to 1C charge specific energy (mAh/g) tests.

Under a constant-temperature environment of 25°C, cycle life tests of the batteries are carried out under 1C-1C charge-discharge conditions, and for the batteries prepared from the lithium manganese iron phosphate materials of Example 1-3 and Comparative Example 1-2, the number of cycles is measured until the battery capacity decreases to 20% of the rated capacity.

Under a constant-temperature environment of 45°C, cycle life tests of the batteries are carried out under 1C-1C charge-discharge conditions, and for the batteries prepared from the lithium manganese iron phosphate materials of Example 1-3 and Comparative Example 1-2, the number of cycles is measured until the battery capacity decreases to 20% of the rated capacity.

After testing, when the batteries adopt the lithium manganese iron phosphate positive electrode materials prepared from Examples 1-3 and Comparative Examples 1-2, the obtained data for 1C charge specific energy (mAh/g), 1C discharge specific energy (mAh/g), battery cycle life (number of cycles) under 1C-1C charge-discharge conditions at a constant temperature of 25°C, and battery cycle life (number of cycles) under 1C-1C charge-discharge conditions at a constant temperature of 45°C are as shown in Table 2 below.

**Table 1. Composition of lithium manganese iron phosphate positive electrode materials in Examples and Comparative Examples**

| Items | Chemical Formula of Positive Electrode Material | Carbon Source | Proportion of Graphitized Carbon | a/(b+c+d) |
|---|---|---|---|---|
| Comparative Example 1 | Li_{1.04}Mn_{0.55}Fe_{0.35}Mg_{0.1}PO₄ | Graphite | 1.2% | 1.04 |
| Comparative Example 2 | Li_{1.04}Mn_{0.55}Fe_{0.35}Co_{0.1}PO₄ | Carbon Black | 1.05% | 1.04 |
| Example 1 | Li_{1.03}Mn_{0.65}Fe_{0.35}Mg_{0.1}PO₄ | Glucose and PEG | 1.0% | 0.94 |
| Example 2 | Li_{1.02}Mn_{0.58}Fe_{0.35}Nb_{0.1}PO₄ | Glucose and PEG | 0.8% | 0.99 |
| Example 3 | Li_{1.01}Mn_{0.55}Fe_{0.35}Nb_{0.08}Ti_{0.02}PO₄ | Glucose and PEG | 0.5% | 1.01 |

**Table 2. Specific Energy Test Data and Cycle Performance Test Data of Examples and Comparative Examples**

| Items | 1C Constant Current Ratio | 1C Charge Specific Energy | 1C Discharge Specific Energy | 25°C 1C-1C Cycle@80% | 45°C 1C-1C Cycle@80% |
|---|---|---|---|---|---|
| Comparative Example 1 | 75% | 502 | 477 | 3000 | 1000 |
| Comparative Example 2 | 70% | 522 | 496 | 3500 | 1500 |
| Example 1 | 93% | 556 | 518 | 4000 | 2000 |
| Example 2 | 90% | 545 | 510 | 4600 | 2700 |
| Example 3 | 85% | 535 | 503 | 5000 | 3000 |

The lithium manganese iron phosphate material provided in Example 1 enables the battery to achieve a 1C charge specific energy of 556 mAh/g and a 1C discharge specific energy of 518 mAh/g, representing a significant improvement compared with Comparative Example 1-2.

The battery employing the lithium manganese iron phosphate material provided in Example 3 can undergo up to 5000 charge-discharge cycles under 1C-1C charge-discharge conditions at a constant temperature of 25°C, and up to 3000 charge-discharge cycles under 1C-1C charge-discharge conditions at a constant temperature of 45°C, representing a significant improvement compared with Comparative Example 1-2.

By comparing the 1C charge specific energy and 1C discharge specific energy test data of the batteries employing the lithium manganese iron phosphate materials provided in Examples 1-3, it can be seen that when the content of graphitized carbon in the lithium manganese iron phosphate material ranges from 0.48%-1.02%, the charge and discharge specific energy of the positive electrode material increases with increasing graphitized carbon content, whereas the number of charge-discharge cycles of the battery under 1C-1C charge-discharge conditions at a constant temperature of 25°C decreases, and the number of charge-discharge cycles of the battery under 1C-1C charge-discharge conditions at a constant temperature of 45°C also decreases.

By comparing the 1C charge specific energy and 1C discharge specific energy test data of the batteries employing the lithium manganese iron phosphate materials provided in Examples 1-3 and Comparative Examples 1-2, it can be seen that when the content of graphitized carbon in the lithium manganese iron phosphate material is greater than 1.02%, the charge and discharge specific energy of the positive electrode material is significantly reduced.

By comparing the number of charge-discharge cycles of the batteries employing the lithium manganese iron phosphate materials provided in Examples 1-3 under 1C-1C charge-discharge conditions at a constant temperature of 25°C, it can be seen that when the value of a/(b+c+d) in the positive electrode material LiₐMn_{b}Fe_{c}M_{d}PO₄ ranges from 0.98 to 1.03, the cycle life of the battery increases with an increase in the value of a/(b+c+d). By comparing the number of charge-discharge cycles of the batteries employing the lithium manganese iron phosphate materials provided in Examples 1-3 under 1C-1C charge-discharge conditions at a constant temperature of 45°C, it can be seen that when the value of a/(b+c+d) in the positive electrode material LiₐMn_{b}Fe_{c}M_{d}PO₄ ranges from 0.98 to 1.03, the cycle life of the battery increases with an increase in the value of a/(b+c+d).

By comparing the number of charge-discharge cycles of the batteries employing the lithium manganese iron phosphate materials provided in Examples 1-3 and Comparative Examples 1-2 under 1C-1C charge-discharge conditions at a constant temperature of 25°C, it can be seen that when the value of a/(b+c+d) in the positive electrode material LiₐMn_{b}Fe_{c}M_{d}PO₄ is greater than 1.03, the cycle life of the battery is significantly reduced. By comparing the number of charge-discharge cycles of the batteries employing the lithium manganese iron phosphate materials provided in Examples 1-3 and Comparative Examples 1-2 under 1C-1C charge-discharge conditions at a constant temperature of 45°C, it can be seen that when the value of a/(b+c+d) in the positive electrode material LiₐMn_{b}Fe_{c}M_{d}PO₄ is greater than 1.03, the cycle life of the battery is significantly reduced.

In the lithium-ion batteries prepared using the above lithium manganese iron phosphate material, manganese precipitation may occur during use, i.e., manganese ions in the positive electrode material precipitate out from the positive electrode material and deposit on the negative electrode or other components. Manganese precipitation may lead to a reduction in battery capacity, a shortening of battery life, and a deterioration in safety performance.

By adopting the above-described second preparation method provided in the embodiments of the present application, i.e., synthesizing the precursor 2 of lithium manganese iron phosphate by a liquid-phase method and synthesizing the lithium manganese iron phosphate material by a solid-phase method, the liquid-phase synthesis of precursor 2 enables atomic-level mixing of Mn and Fe, forming a uniform precursor for lithium manganese iron phosphate and reducing manganese precipitation.

### Performance Test 2:

Three lithium manganese iron phosphate materials provided in Examples 4-6 were synthesized by employing the second preparation method described in the above embodiments, and two lithium manganese iron phosphate materials provided in Comparative Examples 1-2 were synthesized by a pure solid-phase method. The amount of precipitated manganese in the lithium-ion battery materials prepared in Examples 4-6 and Comparative Examples 1-2 was analyzed and tested.

### Example 4

This example provides a lithium manganese iron phosphate material, and the chemical formula of the core material of the lithium manganese iron phosphate material is Li_{1.03}Mn_{0.65}Fe_{0.35}Mg_{0.1}PO₄. The lithium manganese iron phosphate material is prepared by the following method:
Step (1): Provide and mix sufficient amounts of manganese sulfate, iron phosphate, magnesium oxide, and phosphoric acid, and slowly add hydrogen peroxide and HEDP to obtain a mixed solution 1. The mixed solution 1 is heated to 90°C, and then filtered and dried to obtain a precursor 2.
Step (2): Mix and grind the precursor 2, glucose, PEG, and lithium carbonate to obtain a precursor 3. Lithium from lithium carbonate, manganese from the manganese sulfate, iron from the iron phosphate, magnesium from the magnesium oxide, and phosphorus from the phosphoric acid are proportioned according to the stoichiometric ratio in the chemical formula Li_{1.03}Mn_{0.65}Fe_{0.35}Mg_{0.1}PO₄, i.e., in a molar ratio of Li:Mn:Fe:Mg:P = 1.03:0.65:0.35:0.1:1.
Step (3): Perform a sintering process on the above precursor 3 under an inert atmosphere and cooling to room temperature under the inert atmosphere to obtain a powder. The inert atmosphere includes nitrogen, argon, or a mixed gas of nitrogen and argon. Suitable process control parameters for the sintering process include: heating at a heating rate of 6°C/min to 800°C, and holding at this temperature for 18 hours. Glucose and PEG form a carbon coating layer on the outer surface of Li_{1.03}Mn_{0.65}Fe_{0.35}Mg_{0.1}PO₄, and glucose and PEG are converted into graphitized carbon through high-temperature calcination, with the mass percentage of graphitized carbon in the lithium manganese iron phosphate material being 1.0%.

### Example 5

This example provides a lithium manganese iron phosphate material, and the chemical formula of the core material of the lithium manganese iron phosphate material is Li_{1.02}Mn_{0.58}Fe_{0.35}Nb_{0.1}PO₄. The lithium manganese iron phosphate material is prepared by the following method:
Step (1): Provide and mix sufficient amounts of manganese sulfate, iron phosphate, Nb₂O₅, and phosphoric acid, and slowly add hydrogen peroxide and HEDP to obtain a mixed solution 1. The mixed solution 1 is heated to 90°C, and then filtered and dried to obtain a precursor 2.
Step (2): Mix and grind the precursor 2, glucose, PEG, and lithium carbonate to obtain a precursor 3. Lithium from the lithium carbonate, manganese from the manganese sulfate, iron from the iron phosphate, niobium from the niobium oxide, and phosphorus from the phosphoric acid are proportioned according to the stoichiometric ratio in the chemical formula Li_{1.02}Mn_{0.58}Fe_{0.35}Nb_{0.1}PO₄, i.e., in a molar ratio of Li:Mn:Fe:Nb:P = 1.02:0.58:0.35:0.1:1.
Step (3): Perform a sintering process on the above precursor 3 under an inert atmosphere and cooling to room temperature under the inert atmosphere to obtain a powder. The inert atmosphere includes nitrogen, argon, or a mixed gas of nitrogen and argon. Suitable process control parameters for the sintering process include: heating at a heating rate of 6°C/min to 800°C, and holding at this temperature for 18 hours. Glucose and PEG form a carbon coating layer on the outer surface of Li_{1.02}Mn_{0.58}Fe_{0.35}Nb_{0.1}PO₄, and glucose and PEG are converted into graphitized carbon through high-temperature calcination, with the content of graphitized carbon in the lithium manganese iron phosphate material being 0.8%.

### Example 6

This example provides a lithium manganese iron phosphate material, and the chemical formula of the core material of the lithium manganese iron phosphate material is Li_{1.01}Mn_{0.58}Fe_{0.35}Nb_{0.08}Ti_{0.02}PO₄. The lithium manganese iron phosphate material is prepared by the following method:
Step (1): Provide and mix sufficient amounts of manganese sulfate, iron phosphate, Nb₂O₅, TiO₂, and phosphoric acid, and slowly add hydrogen peroxide and HEDP to obtain a mixed solution 1. The mixed solution 1 is heated to 90°C, and then filtered and dried to obtain a precursor 2.
Step (2): Mix and grind the precursor 2, glucose, PEG, and lithium carbonate to obtain a precursor 3. Lithium from the lithium carbonate, manganese from the manganese sulfate, iron from the iron phosphate, Nb from Nb₂O₅, Ti from TiO₂, and phosphorus from the phosphoric acid are proportioned according to the stoichiometric ratio in the chemical formula Li_{1.01}Mn_{0.58}Fe_{0.35}Nb_{0.08}Ti_{0.02}PO₄, i.e., in a molar ratio of Li:Mn:Fe:Nb:Ti:P = 1.01:0.58:0.35:0.08:0.02:1.
Step (3): Perform a sintering process on the above precursor 3 under an inert atmosphere and cooling to room temperature under the inert atmosphere to obtain a powder. The inert atmosphere includes nitrogen, argon, or a mixed gas of nitrogen and argon. Suitable process control parameters for the sintering process include: heating at a heating rate of 6°C/min to 800°C, and holding at this temperature for 18 hours. Glucose and PEG form a carbon coating layer on the outer surface of Li_{1.01}Mn_{0.58}Fe_{0.35}Nb_{0.08}Ti_{0.02}PO₄, and glucose and PEG are converted into graphitized carbon through high-temperature calcination, with the content of graphitized carbon in the lithium manganese iron phosphate material being 0.5%.

Comparative Examples 1-2 are the same as those provided in Performance Test 1.

The preparation methods of the lithium-ion batteries of Examples 4-6 and Comparative Examples 1-2 are the same as described above.

The test method for determining the amount of precipitated manganese ions includes the following steps:
Step (1): Charge lithium-ion battery samples prepared according to Examples 4-6 and Comparative Examples 1-2 to a standard voltage, and maintain each battery in a normal operating state for 24 hours.
Step (2): Remove the lithium-ion battery samples of Examples 4-6 and Comparative Examples 1-2, and disassemble the samples by subjecting the batteries to solvent extraction and using an appropriate solvent to dissolve the manganese ions from the batteries.
Step (3): Measure the mass of manganese ions in the lithium-ion battery samples of Examples 4-6 and Comparative Examples 1-2 by precipitating the manganese ions from the solution with a solvent, drying the precipitate, and weighing it, and then calculate the mass of the precipitated manganese ions.

The test results for the mass of manganese ions precipitated from the lithium-ion batteries prepared in Examples 4-6 and Comparative Examples 1-2 are as follows.

**Table 3. Analysis Data for Precipitated Manganese in Examples 4-6 and Comparative Examples 1-2**

| Items | Chemical Formula of Positive Electrode Material | Mass of Manganese Precipitated From PM (g) |
|---|---|---|
| Comparative Example 1 | Li_{1.04}Mn_{0.55}Fe_{0.35}Mg_{0.1}PO₄ | 462 |
| Comparative Example 2 | Li_{1.0}4Mn_{0.55}Fe_{0.35}Co_{0.1}PO₄ | 217 |
| Example 4 | Li_{1.03}Mn_{0.65}Fe_{0.35}Mg_{0.1}PO₄ | 21.5 |
| Example 5 | Li_{1.02}Mn_{0.58}Fe_{0.35}Nb_{0.1}PO₄ | 15.8 |
| Example 6 | Li_{1.01}Mn_{0.55}Fe_{0.35}Nb_{0.08}Ti_{0.02}PO₄ | 2.9 |

By comparatively analyzing the mass of precipitated manganese in Examples 4-6 and Comparative Examples 1-2, it can be concluded that, by adopting the second preparation method provided in the embodiments of the present application, i.e., synthesizing the precursor by a liquid-phase method and synthesizing the lithium manganese iron phosphate material by a solid-phase method, manganese precipitation in the lithium-ion battery can be significantly reduced, thereby improving battery performance.

## Claims

1. A lithium manganese iron phosphate material, comprising a core and a coating layer coated on a surface of the core, wherein a material of the core comprises a compound having a chemical formula of LiₐMn_{b}Fe_{c}M_{d}PO₄, wherein M comprises at least one element selected from a group consisting of magnesium, calcium, strontium, cobalt, titanium, zirconium, molybdenum, vanadium, niobium, nickel, scandium, chromium, copper, zinc, beryllium, lanthanum, and aluminum, and the carbon coating layer comprises graphitized carbon.

2. The lithium manganese iron phosphate material according to claim 1, wherein a mass percentage of the graphitized carbon in the lithium manganese iron phosphate material ranges from 0.48% to 1.02%.

3. The lithium manganese iron phosphate material according to claim 1, wherein the coating layer is configured to be formed by sintering a carbon source, and the carbon source for forming the coating layer comprises at least one selected from a group consisting of glucose, xylitol, polyethylene glycol, sucrose, lactose, and citrated polyacrylamide.

4. The lithium manganese iron phosphate material according to any one of claims 1 to 3, wherein a mass percentage of the carbon coating layer in the lithium manganese iron phosphate material ranges from 0.5% to 3%.

5. The lithium manganese iron phosphate material according to any one of claims 1 to 3, wherein in LiₐMn_{b}Fe_{c}M_{d}PO₄, 0.98 ≤ a ≤ 1.10, 0.10 ≤ b ≤ 0.68, 0.20 ≤ c ≤ 0.70, 0.01 ≤ d ≤ 0.12, and 0.98 ≤ a/(b+c+d) ≤ 1.03; or in LiₐMn_{b}Fe_{c}M_{d}PO₄, 0.98 ≤ a ≤ 1.05, 0.10 ≤ b ≤ 0.68, 0.20 ≤ c ≤ 0.70, 0.005 ≤ d ≤ 0.12, and 0.98 ≤ a/(b+c+d) ≤ 1.03.

6. The lithium manganese iron phosphate material according to claim 5, wherein in LiₐMn_{b}Fe_{c}M_{d}PO₄, a molar content of manganese is greater than a molar content of iron.

7. A method for preparing a lithium manganese iron phosphate material, comprising the following steps:
mixing a lithium source, a manganese source, an iron source, a phosphorus source, a doping metal M source, and a carbon source to obtain a precursor 1; and
performing a sintering treatment on the precursor 1 under an inert atmosphere to obtain the lithium manganese iron phosphate material;
wherein the doping metal M source comprises one or more selected from a group consisting of a magnesium source, a calcium source, a strontium source, a cobalt source, a titanium source, a zirconium source, a molybdenum source, a vanadium source, a niobium source, a nickel source, a scandium source, a chromium source, a copper source, a zinc source, a beryllium source, a lanthanum source, and an aluminum source.

8. The method for preparing the lithium manganese iron phosphate material according to claim 7, wherein in the step of mixing the lithium source, the manganese source, the iron source, the phosphorus source, the doping metal M source, and the carbon source to obtain the precursor 1, a molar ratio of lithium from the lithium source, manganese from the manganese source, iron from the iron source, and a doping metal from the doping metal source is (0.98-1.10):(0.10-0.68):(0.20-0.70):(0.01-0.12).

9. The method for preparing the lithium manganese iron phosphate material according to claim 7, wherein the step of performing the sintering treatment on the precursor 1 comprises heating the precursor 1 to a first temperature at a first heating rate and maintaining the first temperature for a first period of time; wherein,
the first heating rate ranges from 2°C/min to 10°C/min; and/or
the first temperature ranges from 600°C to 950°C; and/or
the first period of time ranges from 5 hours to 24 hours.

10. A method for preparing a lithium manganese iron phosphate material, comprising the following steps:
mixing a manganese source, an iron source, a phosphorus source, a doping metal M source, hydrogen peroxide, and a complexing agent to obtain a mixed solution 1;
heating the mixed solution 1, followed by filtration and drying to obtain a precursor 2;
mixing the precursor 2, a carbon source, a lithium source, and a surfactant to obtain a precursor 3; and
performing a sintering treatment on the precursor 3 to obtain the lithium manganese iron phosphate material;
wherein the doping metal source comprises one or more selected from a group consisting of a magnesium source, a calcium source, a strontium source, a cobalt source, a titanium source, a zirconium source, a molybdenum source, a vanadium source, a niobium source, a nickel source, a scandium source, a chromium source, a copper source, a zinc source, a beryllium source, a lanthanum source, and an aluminum source.

11. The method for preparing the lithium manganese iron phosphate material according to claim 10, wherein in the step of mixing the lithium source, the manganese source, the iron source, the phosphorus source, the doping metal M source, and the carbon source to obtain the precursor 1, a molar ratio of lithium from the lithium source, manganese from the manganese source, iron from the iron source, and a doping metal from the doping metal source is (0.98-1.05):(0.10-0.68):(0.20-0.70):(0.005-0.12).

12. The method for preparing the lithium manganese iron phosphate material according to claim 10, wherein the step of heating the mixed solution 1 comprises heating the mixed solution 1 to a second temperature, and the second temperature ranges from 60°C to 95°C.

13. The method for preparing the lithium manganese iron phosphate material according to claim 10, wherein the step of performing the sintering treatment on the precursor 3 comprises heating the precursor 3 to a first temperature at a first heating rate and maintaining the first temperature for a first period of time; wherein,
the first heating rate ranges from 2°C/min to 10°C/min; and/or
the first temperature ranges from 600°C to 950°C; and/or
the first period of time ranges from 5 hours to 24 hours.

14. The method for preparing the lithium manganese iron phosphate material according to claim 7 or 10, wherein the lithium source comprises at least one of lithium carbonate and lithium dihydrogen phosphate.

15. The method for preparing the lithium manganese iron phosphate material according to claim 7 or 10, wherein the iron source comprises at least one selected from a group consisting of ferrous sulfate, iron phosphate, ferric hydrogen phosphate, ferric dihydrogen phosphate, ferric acetate, and iron powder.

16. The method for preparing the lithium manganese iron phosphate material according to claim 7 or 10, wherein the manganese source comprises at least one selected from a group consisting of manganese sulfate, manganese carbonate, manganese nitrate, manganese acetate, manganese oxalate, manganese phosphate, and manganese hydrogen phosphate.

17. The preparation method of the lithium manganese iron phosphate material according to claim 7 or 10, wherein the phosphorus source comprises at least one of phosphoric acid and ammonium dihydrogen phosphate.

18. The method for preparing the lithium manganese iron phosphate material according to claim 7 or 10, **characterized in that** the doping metal M source comprises at least one selected from a group consisting of phosphates, hydrogen phosphates, dihydrogen phosphates, carbonates, formates, acetates, hydroxyacetates, lactates, tartrates, oxalates, oxides, hydroxides, fluorides, chlorides, nitrates, sulfates, and bromides of at least one element selected from a group consisting of magnesium, calcium, strontium, cobalt, titanium, zirconium, molybdenum, vanadium, niobium, nickel, scandium, chromium, copper, zinc, beryllium, lanthanum, and aluminum.

19. The method for preparing the lithium manganese iron phosphate material according to claim 18, wherein the doping metal source comprises a phosphate of at least one element selected from a group consisting of magnesium, calcium, strontium, cobalt, titanium, zirconium, molybdenum, vanadium, niobium, nickel, scandium, chromium, copper, zinc, beryllium, lanthanum, and aluminum, and the phosphate of at least one element selected from the group consisting of magnesium, calcium, strontium, cobalt, titanium, zirconium, molybdenum, vanadium, niobium, nickel, scandium, chromium, copper, zinc, beryllium, lanthanum, and aluminum from the doping metal source is configured in an olivine structure.

20. The method for preparing the lithium manganese iron phosphate material according to claim 10, wherein the complexing agent comprises at least one selected from a group consisting of HEDP, ATMP, and DTPA.

21. The method for preparing the lithium manganese iron phosphate material according to claim 10, wherein the surfactant comprises at least one of PEG and ATMP.

22. A positive electrode plate, comprising a positive electrode current collector and a positive electrode active material layer, wherein the positive electrode active material layer is located on a surface of the positive electrode current collector, and a material of the positive electrode active material layer comprises the lithium manganese iron phosphate material as claimed in any one of claims 1 to 6 or a lithium manganese iron phosphate material obtained by the preparation method as claimed in any one of claims 7 to 21.

23. A lithium-ion battery, comprising the lithium manganese iron phosphate material as claimed in any one of claims 1 to 6.
